(19) Europäisches Patentamt / European Patent Office / Office européen des brevets

(11) **EP 4 002 264 A1**

(12) **DEMANDE DE BREVET EUROPEEN**

(43) Date de publication:
**25.05.2022 Bulletin 2022/21**

(21) Numéro de dépôt: **21207181.5**

(22) Date de dépôt: **09.11.2021**

(51) Classification Internationale des Brevets (IPC):
**G06T 5/00** *(2006.01)* **G06T 5/50** *(2006.01)*
**H04N 5/235** *(2006.01)* **H04N 5/232** *(2006.01)*

(52) Classification Coopérative des Brevets (CPC):
**G06T 5/50; G06T 5/007; H04N 5/23225;**
**H04N 5/2355;** G06T 2207/20081;
G06T 2207/20084; G06T 2207/20208;
G06T 2207/20212

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **13.11.2020 FR 2011659**

(71) Demandeur: **Commissariat à l'Énergie Atomique
et aux Énergies Alternatives
75015 Paris (FR)**

(72) Inventeurs:
• **SAZONOV, Vasily
91191 GIF SUR YVETTE CEDEX (FR)**
• **TAMAAZOUSTI, Mohamed
91191 GIF SUR YVETTE CEDEX (FR)**

(74) Mandataire: **Lavoix
2, place d'Estienne d'Orves
75441 Paris Cedex 09 (FR)**

(54) **SOLUTION D'AIDE À LA VISUALISATION POUR SIMULER UN PROCESSUS D'AUTO-EXPOSITION**

(57) L'invention concerne un procédé (32) d'affichage d'un ensemble d'image(s), ledit ensemble d'image(s) comprenant au moins une image, le procédé comprenant au moins les étapes suivantes :
- une étape de réception (34) dudit ensemble d'image(s) obtenu à partir d'un premier capteur d'image(s) propre à appliquer à chaque image une première exposition,
- une étape d'association (54) à chaque image dudit ensemble d'image(s) d'une durée d'affichage représentative d'une deuxième exposition, distincte de la première exposition pour au moins une image dudit ensemble d'image(s),
- une étape d'affichage (56) dudit ensemble d'image(s) en appliquant pour chaque image dudit ensemble d'image(s), sa durée d'affichage associée.

FIG.2

EP 4 002 264 A1

**Description**

La présente invention concerne le domaine du traitement de l'image, et plus précisément un procédé d'affichage d'un ensemble d'image(s) comprenant au moins une image.

Les systèmes de visualisation actuels tels que des appareils photos, des caméras vidéo, ou encore l'œil humain se caractérisent par une latitude d'exposition limitée et sont propres à travailler avec une gamme de luminosité également limitée (i.e. non infinie). Pour optimiser l'affichage et l'observation associée, il est nécessaire d'ajuster l'exposition. Pour les systèmes de visualisation actuels tels que des appareils photos, des caméras vidéo, etc., un tel ajustement est le plus couramment obtenu au moyen de différents algorithmes d'exposition automatique en fonction de la nature du capteur d'image(s) utilisé. Autrement dit, il y a autant d'algorithmes d'exposition automatique (i.e. d'auto-exposition) qu'il n'y a de types de capteur d'image(s). En ce qui concerne le capteur d'image(s) correspondant à l'œil humain, c'est le cerveau humain qui effectue naturellement un tel ajustement.

Au vu d'une telle diversité, en post-traitement d'images, simuler le rendu d'un ensemble d'image(s), cet ensemble d'image(s) comprenant au moins une image, qui serait obtenu en utilisant un capteur d'image(s), distinct du capteur d'image(s) ayant fourni cet ensemble d'image(s), est plus que complexe et parfois même impossible si l'on considère que le capteur d'image(s) distinct du capteur d'image(s) ayant fourni cet ensemble d'image(s) est par exemple l'œil humain, dont le processus d'auto-exposition est difficilement exprimable sous la forme d'un algorithme mathématique exhaustif.

En effet, quand bien même des techniques d'apprentissage profond (de l'anglais *deep learning*), telles que notamment introduites dans l'article de Y. LeCun et al. Intitulé « Deep learning » nature, 521(7553), 436-444 (2015), seraient mises en œuvre, de telles techniques impliquent l'apprentissage de très nombreux paramètres liés à chaque capteur d'image(s), données par ailleurs inconnues pour l'œil humain, et l'utilisation d'un très grand réseau de neurones artificiels pour couvrir différents ensembles d'images, des cartes vidéos très puissantes ou bien même des superordinateurs (i.e. supercalculateur) lorsque la capacité de calcul requise est supérieure à celle propre à être fournie par un ordinateur standard.

C'est notamment actuellement le cas lorsque, dans un contexte de réalité augmentée ou de réalité virtuelle, on cherche à modéliser, à partir d'un ensemble d'image(s) fourni par un appareil photo ou une caméra vidéo, l'effet sur la luminosité de différents types de fenêtres, perçu par l'œil humain au sein d'un intérieur sans pour autant procéder au changement concret de fenêtre, mais pour aider à la sélection du type de fenêtre le plus adapté à l'application souhaitée, par exemple pour de la décoration intérieure, l'élaboration du vitrage d'un véhicule autonome, etc.

Le but de l'invention est alors de proposer une solution d'aide à la visualisation pour simuler fidèlement le processus d'auto-exposition mis en œuvre par un capteur d'image(s) distinct du capteur d'image(s) ayant fourni cet ensemble d'image(s), et ce en limitant la complexité de post-traitement.

A cet effet, l'invention a pour objet un procédé d'affichage d'un ensemble d'image(s) comprenant au moins une image, le procédé comprenant au moins les étapes suivantes :

- une étape de réception dudit ensemble d'image(s) obtenu à partir d'un premier capteur d'image(s) propre à appliquer à chaque image une première exposition,
- une étape d'association à chaque image dudit ensemble d'image(s) d'une durée d'affichage représentative d'une deuxième exposition, distincte de la première exposition pour au moins une image dudit ensemble d'image(s),
- une étape d'affichage dudit ensemble d'image(s) en appliquant pour chaque image dudit ensemble d'image(s), sa durée d'affichage associée.

Ainsi, la présente invention propose de simuler un changement d'algorithme d'auto-exposition respectivement associé à un changement de capteur d'image(s), comprenant notamment l'œil humain, en « jouant » sur la durée d'affichage de chaque image de l'ensemble d'image(s) fourni initialement par le premier capteur d'images(s), la durée d'affichage étant propre à varier pour au moins deux images distinctes dudit ensemble d'image(s).

Il est à noter qu'il n'était pas évident pour l'homme du métier de détecter et de formuler le problème de visualisation et d'auto-exposition inhérent à un changement « virtuel » de capteur d'image(s) comprenant notamment l'œil humain, dont le processus d'auto-exposition est difficilement exprimable sous la forme d'un algorithme mathématique exhaustif. L'invention est donc au moins en partie une invention de problème correspondant à la détection d'un tel besoin de réalité augmentée associé à un changement de capteur d'image(s).

La solution proposée selon la présente invention basée sur une optimisation de la durée d'affichage de chaque image de l'ensemble d'image(s) pour restituer fidèlement l'effet de tout capteur d'image(s) permet une réduction importante du nombre de paramètres qui seraient classiquement utilisés selon des techniques d'apprentissage profond, puisque la correspondance entre les algorithmes d'auto-exposition de deux capteurs d'image(s) distinct est obtenue au moyen d'un unique paramètre à savoir la durée d'affichage de chaque image préalablement fournie par un premier capteur.

Autrement dit, l'ajustement et l'apprentissage d'algorithme d'auto-exposition proposé selon la présente invention pour passer de (i.e. faire correspondre) la restitution d'image(s) (i.e. le rendu visuel) d'un premier capteur d'image(s) fournisseur d'un ensemble d'image(s) à la restitution d'image(s) associée à un autre capteur d'image(s), par exemple utilisé virtuellement, est unidimensionnel.

Suivant d'autres aspects avantageux de l'invention, le procédé d'affichage comprend une ou plusieurs des caractéristiques suivantes, prises isolément ou suivant toutes les combinaisons techniquement possibles :

- ledit ensemble d'image(s) reçu et obtenu à partir du premier capteur d'image(s) comprend :

    - une séquence d'images, chaque image étant associée à un instant de capture distinct, ou
    - deux images d'une même scène comprenant une image à faible gamme dynamique et une image à gamme dynamique élevée, ou
    - une seule image propre à être utilisée pour générer au moins lesdites deux images ;

- ladite association est mise en œuvre en utilisant une fonction prédéterminée associant à un instant de capture de chaque image dudit ensemble d'image(s) une valeur, prédéterminée de la durée d'affichage, propre à varier d'une image à l'autre dudit ensemble d'image(s) ;
- le procédé comprend en outre, préalablement à ladite étape d'association, une étape de complétion dudit ensemble d'image(s) par mise en œuvre d'une interpolation temporelle propre à générer au moins une image additionnelle associée à un instant de capture distinct de l'instant de capture associé à chaque image dudit ensemble d'image(s) reçu et obtenu à partir du premier capteur d'image(s), ladite au moins une image additionnelle et ledit ensemble d'image(s) reçu et obtenu à partir du premier capteur d'image(s) formant un ensemble d'images complété auquel ladite étape d'association est ensuite appliquée ;
- lorsque ledit ensemble d'image(s) reçu et obtenu à partir du premier capteur d'image(s) comprend une seule image, ladite étape de complétion comprend en outre l'utilisation d'au moins un réseau de neurones artificiels pour générer une deuxième image additionnelle, l'ensemble d'images, complété par ladite deuxième image additionnelle, comprenant deux images d'une même scène dont une image à faible gamme dynamique et une image à gamme dynamique élevée ;
- ledit au moins un réseau de neurones artificiels correspond à un ensemble de réseaux antagonistes génératifs ;
- lorsque ledit ensemble d'image(s) reçu et obtenu à partir du premier capteur d'image(s) comprend au moins deux images ou, lorsque l'ensemble d'images complété comprend au moins deux images, l'étape de complétion est réitérée jusqu'à atteindre un critère de remplissage dudit ensemble d'images complété, ledit critère de remplissage correspondant à une distance inter-image prédéterminée ;
- ladite distance inter-image est une distance Euclidienne ;
- lorsque ledit ensemble d'image(s) reçu et obtenu à partir du premier capteur d'image(s) comprend au moins deux images ou lorsque l'ensemble d'images complété comprend au moins deux images, l'interpolation temporelle correspond à une interpolation au ralenti ;

L'invention a également pour objet un programme d'ordinateur comportant des instructions logicielles qui, lorsqu'elles sont exécutées par un ordinateur, mettent en œuvre un tel procédé d'affichage.

L'invention a également pour objet un dispositif électronique d'affichage d'un ensemble d'image(s), ledit ensemble d'image(s) comprenant au moins une image, caractérisé en ce que le dispositif comprend :

- un module de réception configuré pour recevoir ledit ensemble d'image(s) obtenu à partir d'un premier capteur d'image(s) propre à appliquer à chaque image une première exposition,
- un module d'association configuré pour associer à chaque image dudit ensemble d'image(s) une durée d'affichage représentative d'une deuxième exposition, distincte de la première exposition pour au moins une image dudit ensemble d'image(s),
- un module d'affichage configuré pour afficher ledit ensemble d'image(s) en appliquant pour chaque image dudit ensemble d'image(s), sa durée d'affichage associée.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un dispositif électronique d'affichage d'un ensemble d'image(s), comprenant au moins une image, selon un mode de réalisation de la présente invention ;
- la figure 2 est un organigramme d'un procédé d'affichage d'un ensemble d'image(s), comprenant au moins une image ;

- la figure 3 est une représentation graphique d'une fonction prédéterminée associant à un instant de capture de chaque image de l'ensemble d'image(s) traité selon la présente invention une valeur, prédéterminée de la durée d'affichage, propre à varier d'une image à l'autre dudit ensemble d'image(s).

Dans la présente description, sauf autre précision, les expressions « sensiblement », « environ », « approximativement » et « de l'ordre de » définissent une relation d'égalité à plus ou moins 10%, de préférence à plus ou moins 5%.

Par la suite, par « exposition » on entend une quantité de rayonnement actinique reçue par un élément photosensible (i.e. un capteur d'image(s)). En particulier, si l'on considère l'élément photosensible (i.e. le capteur d'image(s)) d'une caméra, lorsque l'exposition est trop faible, la ou les image(s) résultante(s) apparaissent sombres et sous-exposée, les zones sombres et les ombres sont dépourvues de détails et parfois même aucune image exploitable ne peut être obtenue. A l'inverse, une image associée à une exposition excessive manque de détails dans les endroits clairs, ce qui peut déformer le contenu de l'image de manière significative. C'est le cas particulièrement prononcé pour les caméras numériques et les caméras vidéo, lorsque la surexposition entraîne l'apparition de parties "brisées" de l'image avec des informations totalement manquantes en raison de l'effet de saturation matricielle. On peut distinguer « l'exposition manuelle » personnalisable manuellement par un opérateur (i.e. utilisateur) du capteur d'image(s)et l'auto-exposition (i.e. exposition automatique) mise en œuvre conformément à un algorithme spécifique et prédéterminé associé au capteur d'image(s) utilisé. La présente invention est spécifiquement focalisée sur la simulation et l'affichage du processus d'auto-exposition propre à être mis en œuvre par un capteur d'image(s) distinct de celui utilisé pour obtenir un ensemble E-I d'image(s) à disposition et utilisé en entrée du dispositif d'affichage comme du procédé d'affichage selon la présente invention. Un tel ensemble d'image(s) E-I est propre à présenter différents degrés de détails en correspondant notamment à :

- une séquence vidéo, d'une scène dont les sources de lumières et la géométrie de chaque objet sont connus, la séquence vidéo étant obtenue au moyen d'un capteur d'image(s) dont les paramètres de sensibilité comme l'algorithme d'auto-exposition sont également connus ;
- une séquence vidéo obtenue sans information sur la scène ou encore le capteur d'image(s) ayant fourni ladite séquence vidéo ;
- deux image d'une scène comprenant une image à faible gamme dynamique et une image à gamme dynamique élevée, ou encore
- une unique image de cette scène.

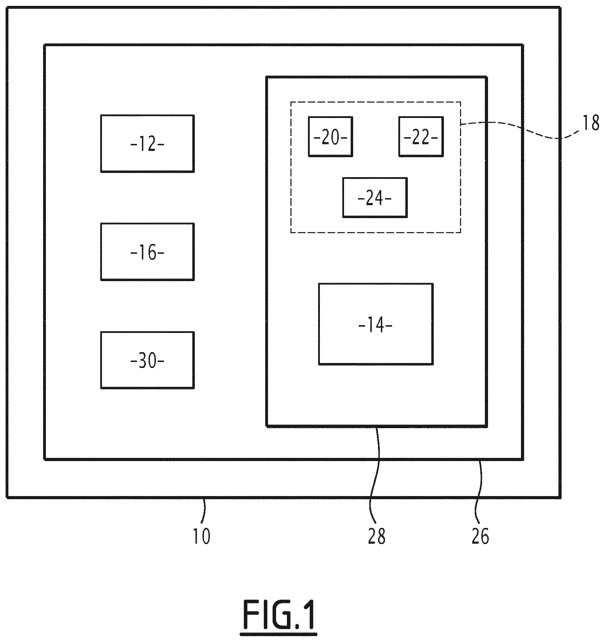

Sur la figure 1, un dispositif électronique 10 d'affichage d'un ensemble d'image(s) est selon la présente invention configuré pour afficher un ensemble d'image(s) fourni par un premier capteur d'image(s), non représenté, « comme si » en termes d'exposition cet ensemble d'images avait été obtenu, à la place, à partir d'un deuxième capteur d'image(s) distinct du premier capteur d'image(s). Un tel deuxième capteur d'images pourrait potentiellement correspondre à l'œil humain ou à un appareil électronique distinct de celui comprenant le premier capteur d'image(s).

Par premier capteur d'image(s), on entend un capteur d'image(s) connu en soi, à savoir par exemple un capteur d'image(s) configuré pour prendre une ou plusieurs images d'une scène en appliquant à chaque image une première exposition au moyen d'un algorithme d'auto-exposition propre à ce premier capteur d'image(s), et les transmettre au dispositif électronique d'affichage 10.

Le dispositif d'affichage 10 comprend un module de réception 12 configuré pour recevoir l'ensemble d'image(s) obtenu à partir du premier capteur d'image(s), un module d'association 14 configuré pour associer à chaque image dudit ensemble d'image(s) une durée d'affichage représentative d'une deuxième exposition, distincte de la première exposition pour au moins une image dudit ensemble d'image(s), un module d'affichage 16 configuré pour afficher ledit ensemble d'image(s) en appliquant pour chaque image dudit ensemble d'image(s), sa durée d'affichage associée.

Optionnellement (représenté en pointillés), notamment selon le mode de réalisation de la figure 1, le dispositif d'affichage 10 comprend en outre un module de complétion 18 de l'ensemble d'image(s) propre à générer au moins une image additionnelle, ladite au moins une image additionnelle et ledit ensemble d'image(s) reçu et obtenu à partir du premier capteur d'image(s) formant un ensemble d'images complété propre à être ensuite traité par le module d'association précédemment cité.

En effet, l'ensemble d'image(s) reçu et obtenu à partir du premier capteur d'image(s) correspond à (i.e. comprend) : une séquence d'images, chaque image étant associée à un instant de capture distinct, ou deux images d'une même scène comprenant une image à faible gamme dynamique et une image à gamme dynamique élevée, ces deux images étant sensiblement acquises au même instant de capture par le premier capteur d'image(s), ou encore à une seule image propre à être utilisée pour générer au moins lesdites deux images respectivement à faible gamme dynamique et à gamme dynamique élevée.

En particulier, le module de complétion 18 comprend au moins un réseau de neurones artificiels 20. Un tel au moins un réseau de neurones artificiels 20 est notamment propre à être utilisé lorsque l'ensemble d'image(s) reçu et obtenu à partir du premier capteur d'image(s) correspond à une seule image. Dans ce cas, le réseau de neurones artificiels 20 est utilisé pour générer une deuxième image additionnelle à partir de cette unique image reçue du premier capteur d'image afin d'obtenir une image à faible gamme dynamique et une image à gamme dynamique élevée, ces deux images étant sensiblement associées au même instant de capture.

Selon une variante particulière, ledit au moins un réseau de neurones artificiels correspond à un ensemble de réseaux antagonistes génératifs GANs (de l'anglais *Generative Adversarial Networks*) tels que notamment introduits dans l'article de G. Eilertsen et al. intitulé « HDR image reconstruction from a single exposure using deep CNNs ». publié dans ACM Transactions on Graphics (Proc. of SIGGRAPH Asia 2017), 36(6), Article 178, (2017), ou dans l'article de D. Marnerides et al., intitulé « A Deep Convolutional Neural Network for High Dynamic Range Expansion from Low Dynamic Range Content » publié dans EUROGRAPHICS 2018, Volume 37 (2018), Number 2, ou dans l'article de L. Siyeong et al. intitulé « Deep Chain HDRI: Reconstructing a High Dynamic Range Image from a Single Low Dynamic Range Image ». arXiv:1801.06277 [csCV], ou encore dans l'article de K. Moriwaki et al. intitulé « Hybrid Loss for Learning Single-Image-based HDR Reconstruction » arXiv:1812.07134 [csCV].

En complément optionnel, le module de complétion 18 comprend un outil de mesure 22 de distance inter-image applicable directement audit ensemble d'image(s) reçu et obtenu à partir du premier capteur d'image(s) lorsqu'il comprend au moins deux images, ou applicable à l'ensemble d'images complété fourni par ledit au moins un réseau de neurones artificiels 20.

Selon un aspect particulier, la distance inter-image est une distance Euclidienne, telle que pour deux images dudit ensemble d'image(s) associé à des instants de capture distincts $t_j$ et $t_v$, avec j et v des entiers :

$$d\left(I\left(t_j\right), I\left(t_v\right)\right) = \frac{1}{\#_c \sqrt{NM}} \sqrt{\sum_{q=0}^{N} \sum_{p=0}^{M} \left(I\left(t_j\right)_{qp} - I\left(t_v\right)_{qp}\right)^2} \qquad (1)$$

avec $I(t_j)_{qv}$ la couleur du pixel de coordonnée $q$ et $p$ de l'image $I(t_j)$ et $\#_c$ la valeur maximale possible de la couleur. Une telle distance euclidienne correspondant à un nombre réel tel que :

$$0 \le d\left(I\left(t_j\right), I\left(t_v\right)\right) \le 1.$$

En complément optionnel, le module de complétion 18 comprend un outil d'interpolation temporelle 24, en particulier une interpolation au ralenti (de l'anglais *Slow motion interpolation*) tel que notamment introduit dans l'article de H. Jiang et al., intitulé « Super SloMo: High Quality Estimation of Multiple Intermediate Frames for Video Interpolation » CVPR, 2018, arXiv:1712.00080 [csCV]. Un tel outil d'interpolation temporelle 24 est notamment configuré pour compléter l'ensemble d'image(s) à fournir ensuite au module d'association 14 jusqu'à atteindre un critère de remplissage $\varepsilon$ prédéterminé correspondant à une distance inter-image prédéterminée. En effet, deux images consécutives peuvent présenter un écart plus ou moins large d'une paire d'images consécutive à un autre, et le critère de remplissage $\varepsilon$ prédéterminé vise à régulariser cet écart afin que l'effet d'auto-exposition soit lissé sur l'ensemble d'image(s).

Dans l'exemple de la figure 1, le dispositif électronique d'affichage 10 comprend une unité de traitement d'informations 26 formée par exemple d'une mémoire 28 et d'un processeur 30 associé à la mémoire 28.

Dans l'exemple de la figure 1, le module d'association 14, ainsi qu'en complément facultatif le module de complétion 18, sont réalisés chacun sous forme d'un logiciel, ou d'une brique logicielle, exécutable par le processeur 30. La mémoire 28 du dispositif électronique d'affichage 10 est alors apte à stocker un logiciel d'association à chaque image dudit ensemble d'image(s) d'une durée d'affichage représentative d'une deuxième exposition, distincte de la première exposition pour au moins une image dudit ensemble d'image(s). En complément facultatif, la mémoire 28 du dispositif électronique d'affichage 10 est apte à stocker un logiciel de complétion propre à générer au moins une image additionnelle, ladite au moins une image additionnelle et ledit ensemble d'image(s) reçu et obtenu à partir du premier capteur d'image(s) formant un ensemble d'images complété auquel ladite étape d'association est ensuite appliquée. Le processeur 30 est alors apte à exécuter chacun des logiciels parmi le logiciel d'association ainsi qu'en complément facultatif le logiciel de complétion.

En variante, non représentée, le module d'association 14 ainsi qu'en complément facultatif le module de complétion 18, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif électronique d'affichage 10 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

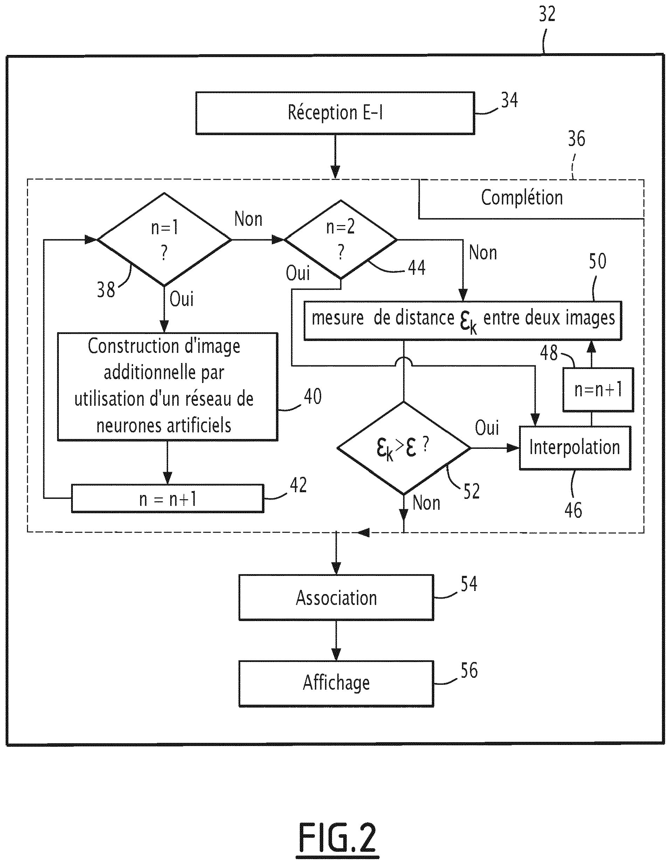

Le fonctionnement du dispositif électronique d'affichage 10 selon l'invention va être à présent décrit en regard de la figure 2 représentant un organigramme du procédé 32 d'affichage selon l'invention, celui-ci étant mis en œuvre par le dispositif électronique d'affichage 10.

Lors d'une étape initiale 34, le dispositif électronique d'affichage 10 reçoit, via son module de réception 12, l'ensemble d'image(s) E-I comprenant $n$ image(s).

Ensuite, tel qu'illustré par la figure 2, lors d'une étape 36, le dispositif électronique d'affichage 10 complète facultativement (tel qu'illustré en pointillés), via son module de complétion 18, l'ensemble d'image(s) E-I.

En particulier, au cours d'une sous-étape 38, le dispositif électronique d'affichage 10, via son module de complétion 18, teste le nombre $n$ d'image(s) de l'ensemble d'image(s) E-I afin de déterminer si oui ou non $n=1$.

Plus précisément, lorsque $n=1$, autrement dit que l'ensemble E-I comprend une seule image, au cours d'une sous-étape 40, via ledit au moins un réseau de neurones artificiels 20 du module de complétion 18, le dispositif électronique d'affichage 10 construit une image additionnelle de sorte à former un ensemble d'images E-I complété comprenant $n=n+1=2$ images correspondant à deux images d'une même scène comprenant une image à faible gamme dynamique et une image à gamme dynamique élevée sensiblement associées au même instant de capture.

Plusieurs techniques à base de réseau(x) de neurones artificiels sont propres à être utilisés selon la présente invention, telles que notamment introduites dans l'article de G. Eilertsen et al. intitulé « HDR image reconstruction from a single exposure using deep CNNs ». publié dans ACM Transactions on Graphics (Proc. of SIGGRAPH Asia 2017), 36(6), Article 178, (2017), ou dans l'article de D. Marnerides et al., intitulé « A Deep Convolutional Neural Network for High Dynamic Range Expansion from Low Dynamic Range Content » publié dans EUROGRAPHICS 2018, Volume 37 (2018), Number 2, ou dans l'article de L. Siyeong et al. intitulé « Deep Chain HDRI: Reconstructing a High Dynamic Range Image from a Single Low Dynamic Range Image ». arXiv:1801.06277 [csCV], ou encore dans l'article de K. Moriwaki et al. intitulé « Hybrid Loss for Learning Single-Image-based HDR Reconstruction » arXiv:1812.07134 [csCV].

Successivement, au cours d'une sous-étape 42, le dispositif électronique d'affichage 10, via son module de complétion 18 incrémente la valeur de $n$ et revient à la sous-étape 38 de test de la valeur $n$ décrite précédemment qui arrive à la conclusion que $n$ n'est plus égal à un.

Selon une sous-étape 44, le dispositif électronique d'affichage 10, via son module de complétion 18, teste le nombre $n$ d'image(s) de l'ensemble d'image(s) E-I afin de déterminer si oui ou non $n=2$.

Dans l'affirmative, selon une sous-étape 46, le dispositif électronique d'affichage 10, via l'outil d'interpolation temporelle 24 de son module de complétion 18, génère une image additionnelle associée à un instant de capture distinct de l'instant de capture associé à chacune des deux images d'une même scène comprenant une image à faible gamme dynamique et une image à gamme dynamique élevée dudit ensemble d'image(s).

Successivement, au cours d'une sous-étape 48, le dispositif électronique d'affichage 10, via son module de complétion 18 incrémente la valeur de $n$.

Selon une sous-étape 50, via l'outil de mesure 22 du module de complétion 18, le dispositif électronique d'affichage 10 mesure la distance $\varepsilon_k$ inter-image entre chaque paire k d'images successives des trois images de l'ensemble d'images E-I complété, tel que :

$$\varepsilon_k = d\big(I(t_k), I(t_{k+1})\big) \text{ selon l'équation (1) indiquée précédemment, avec } k = 0, ..., n +$$

selon l'équation (1) indiquée précédemment, avec $k = 0, ..., n + 1$ avec $t_0 = 0$ et $t_{n+1} = 1$, ce qui revient à deux mesures de distance pour les trois images de l'ensemble d'images E-I complété.

Selon une sous-étape 52, le dispositif électronique d'affichage 10, via son module de complétion 18, compare chaque distance $\varepsilon_k$ à une distance inter-image prédéterminée $\varepsilon$, et pour chaque distances $\varepsilon_k$ entre deux images supérieure à $\varepsilon$, les sous-étape 46 et 48 précédemment décrites sont réitérée pour générer $n_k = \dfrac{\varepsilon}{\varepsilon_k}$ images temporellement intermédiaires entre les deux images associées à la distance $\varepsilon_k$ considérée, suivie à nouveau par l'étape 50 de mesure.

Une fois que le critère de remplissage $\varepsilon$ est atteint, autrement dit une fois que toutes les distances $\varepsilon_k$ associée à chaque paire $k$ de deux images successives est inférieure à la distance inter-image prédéterminée $\varepsilon$, l'étape 54 est mise en œuvre par le dispositif électronique d'affichage 10, via son module d'association 14.

Plus précisément, au cours de cette étape 54, le module d'association 14 du dispositif électronique d'affichage 10, associe à chaque image dudit ensemble d'image(s) complété une durée d'affichage représentative d'une deuxième exposition, distincte de la première exposition pour au moins une image dudit ensemble d'image(s) E-I complété.

En effet, les processus d'auto-exposition d'un capteur d'image(s) à un autre diffèrent principalement dans les temps de réglage (de l'anglais *tuning*) nécessaires pour atteindre le niveau d'exposition recherché en évitant une sur- et une sous-exposition, et pour ce faire, chaque capteur d'image(s) ajuste les mêmes paramètres le long de trajectoires presque voire sensiblement identiques dans l'espace paramétrique, mais avec une vitesse différente d'un capteur d'image(s) à un autre.

La présente invention, propose, de manière non triviale au vu des techniques actuelles d'apprentissage profond basées sur un apprentissage complexe de nombreux paramètre, de matérialiser ces différences associées à un couple de capteurs d'image(s), comprenant un premier capteur d'image(s) et un deuxième capteur d'image(s), par une fonction unidimensionnelle associant une durée d'affichage à chaque image d'un ensemble d'image(s) initial fourni par le premier capteur d'image, pour créer une restitution d'image (i.e. un affichage) différente, en appliquant à chaque image sa durée d'affichage associée, afin de simuler l'affichage qui serait obtenu à partir d'une séquence d'image de la même scène obtenue dans les mêmes conditions, mais par le deuxième capteur d'image(s) dudit couple de capteurs d'image(s), le deuxième capteur d'image(s) étant distinct du premier capteur d'images.

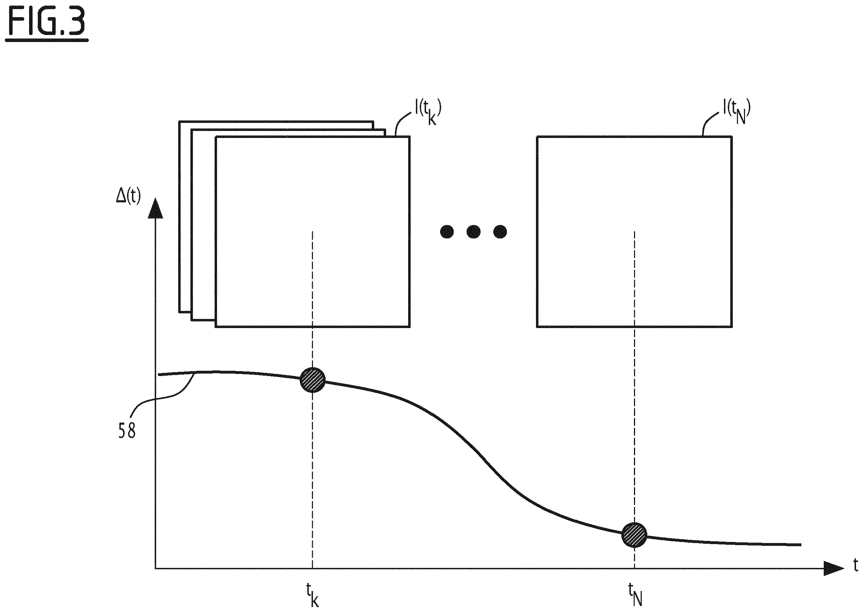

En particulier, ladite association 54 est mise en œuvre en utilisant une fonction prédéterminée associant à un instant de capture de chaque image dudit ensemble d'image(s) complété (ou non en cas d'absence de mise en œuvre de l'étape de complétion 36) une valeur, prédéterminée de la durée d'affichage, propre à varier d'une image à l'autre dudit ensemble d'image(s) considéré. Un exemple d'une telle fonction est notamment illustrée par la figure 3 décrite par la suite.

Enfin, au cours d'une étape 56, le module d'affichage 16 du dispositif électronique d'affichage 10 affiche l'ensemble d'image(s) E-I, le cas échéant complété, en appliquant pour chaque image de cet ensemble d'image(s) E-I, sa durée d'affichage associée à l'étape précédente 54.

Plus précisément, au cours de cette étape 56, le module d'affichage 16 assemble les images de l'ensemble d'image(s) E-I, le cas échéant complété, pour créer par exemple une vidéo V(t) combinant les $n \geq 2$ images de l'ensemble d'image(s) E-I, le cas échéant complété tel que :

$$V(t) = \sum_{k=0}^{n} I(t_k) rect\left(\frac{t - t_k^b - \frac{\Delta(t_k)}{2}}{\Delta(t_k)}\right)$$

où *rect*(*x*) correspond à la fonction rectangle standard, $t_k^b$ est l'instant de début d'affichage de l'image $I(t_k)$ avec $t_k^b = \sum_{l=0}^{k} \Delta(t_l)$, $t_k$ est l'instant de capture de l'image $I(t_k)$.

La figure 3 illustre un choix possible de fonction 58 prédéterminée $\Delta(t)$ associant à un instant de capture de chaque image dudit ensemble d'image(s) complété (ou non en cas d'absence de mise en œuvre de l'étape de complétion 36) une valeur, prédéterminée de la durée d'affichage.

En particulier, la fonction 58 prédéterminée $\Delta(t)$ est non linéaire et a été choisie en fonction des besoins de restitution d'images de l'utilisateur pour notamment augmenter la durée d'affichage des premières images associées à l'instant $t_k$ de l'ensemble d'image(s) E-I, le cas échéant complété, par rapport à la durée d'affichage inférieure associée à la dernière image associée à l'instant $t_N$ de l'ensemble d'image(s) E-I, le cas échéant complété.

Pour une deuxième application, lorsque l'on dispose par exemple d'un ensemble d'image(s) E-I$_B$ fourni par une caméra B dont les paramètres de sensibilités et l'algorithme d'auto-exposition sont connus, et que l'on cherche à afficher un ensemble d'image(s) correspondant tel qu'il aurait été obtenu par une caméra A, de type distinct par rapport à la caméra B, dont les paramètres de sensibilités et l'algorithme d'auto-exposition sont également connus, une deuxième fonction prédéterminée $\Delta(t)$, non représentée, est propre à être utilisée.

Sans la présente invention, obtenir un tel résultat se heurterait actuellement à d'énormes difficultés en raison des non-linéarités associées à latitude d'exposition du fait que la cartographie directe entre deux caméras de type distincts, telles que les caméras A et B, est impossible en raison de l'effet de saturation/déficience, propre à générer une distorsion des parties trop lumineuses ou trop sombres des images. Au contraire, la présente invention telle que décrite précédemment propose une solution reconfigurable en fonction du changement de capteur d'image(s) ou de l'effet souhaité, au moyen d'un unique paramètre à savoir la durée d'affichage conformément à la deuxième fonction prédéterminée $\Delta(t)$ reconfigurable de chaque image préalablement fournie par un premier capteur.

Selon la présente invention appliquée à cette deuxième application, pour obtenir en amont la deuxième fonction prédéterminée $\Delta(t)$ correspondante, on considère deux premier ensembles d'image(s) E_I$_{A\_1}$ et E_I$_{B\_1}$ d'une même scène fournis respectivement par les caméras A et B. Le cas échéant après mise en œuvre de l'étape de complétion 36 avec application d'une interpolation au ralenti à l'ensemble E_I$_{B\_1}$ fourni par la caméra B pour atteindre le critère de remplissage prédéterminé $\varepsilon$, l'ensemble d'image(s) E_I$_{B\_1}$, le cas échéant complété, comprend $n_{B-1}$ images tandis que l'ensemble E_I$_{A\_1}$ comprend $n_A$ images.

Puis, pour chaque image I$_{b-1}$(t$_i$), avec *i* un entier appartenant à [1, ... n$_{B-1}$], on mesure la distance d$_i$, notamment conformément à l'équation (1) de calcul de distance précitée, entre cette image I$_{b-1}$(t$_i$) et les images de l'ensemble d'image(s) E_I$_{A\_1}$ en partant de la première image, en termes de capture temporelle, de l'ensemble d'image(s) E_I$_{A\_1}$ et pour toute les images de E_I$_{A\_1}$ suivantes tant que d$_i$ reste inférieure à un seuil de distance prédéterminé d*.

Ensuite, le nombre $n_i^f$ de l'ensemble d'image(s) E_I$_{A\_1}$ pour lequel *d$_i$* < *d** est comptabilisé. A partir de ce nombre on obtient la durée de d'affichage Δ(t$_i$) à appliquer à l'image I$_{b-1}$(t$_i$) tel que par exemple $\Delta(t_i) = n_i^f/24$ en considérant par exemple que l'ensemble d'image(s) E_I$_{A\_1}$ est affiché selon une fréquence de vingt-quatre images par seconde.

L'homme du métier notera que le cas où $n_i^f = 0$ est également possible lorsque l'image I$_{b-1}$(t$_i$) considérée, le cas échéant auparavant générée par interpolation au ralenti n'est pas pertinente pour établir la correspondance entre l'ensemble d'image(s) E_I$_{A\_1}$ et l'ensemble E_I$_{B\_1}$.

La détermination de chaque valeur Δ(t$_i$) est interrompue après utilisation de toutes les images de l'ensemble d'image(s) E_I$_{A\_1}$ même si $i < n_i^f$ .

On obtient ainsi des valeurs discrètes de la deuxième fonction prédéterminée Δ(t) pour chaque instant t$_i$, avec *i* un entier appartenant à [1, ... n$_{B-1}$]. La version continue de la deuxième fonction prédéterminée Δ(t) est ensuite obtenue en impliquant tout type d'interpolation temporelle, par exemple une interpolation linéaire.

Une telle deuxième fonction prédéterminée Δ(t) est alors ensuite propre à être utilisée lorsque l'on dispose, par exemple, d'un deuxième ensemble d'image(s) E-I$_{B\_2}$ d'une scène, distincte de la scène associée au premier ensemble d'image(s) E-I$_{B\_1}$, fourni par la caméra B, et que l'on cherche à afficher un ensemble d'image(s) correspondant tel qu'il aurait été obtenu par une caméra A. Autrement dit, ici on ne dispose pas de l'ensemble d'image(s) E-I$_{A\_2}$ correspondant mais selon la présente invention il est possible de l'obtenir virtuellement en appliquant à chaque image I$_{b-2}$(t$_i$) la durée d'affichage Δ(t$_i$) correspondante.

L'homme du métier notera bien entendu que toute autre fonction prédéterminée Δ(t) est propre à être utilisée selon la présente invention en fonction des besoins d'affichage souhaitée, y compris la fonction constante Δ(t)$_{\forall t}$ = 1 pour deux capteur d'image(s) identiques. Notamment lorsque, dans un contexte de réalité augmentée ou de réalité virtuelle, on cherche à modéliser, à partir d'un ensemble d'image(s) fourni par un appareil photo ou une caméra vidéo, l'effet sur la luminosité de différents types de fenêtres, perçu par l'œil humain au sein d'un intérieur sans pour autant procéder au changement concret de fenêtre, mais pour aider à la sélection du type de fenêtre le plus adapté à l'application souhaitée, par exemple pour de la décoration intérieure, l'élaboration du vitrage d'un véhicule autonome, etc. Dans ce cas, c'est l'œil humain qui correspond à la caméra A de l'exemple précédent, et son processus d'auto-exposition est difficilement exprimable sous la forme d'un algorithme mathématique exhaustif. La fonction prédéterminée Δ(t) est alors propre à être obtenue de manière empirique par exemple dans un showroom, une usine, un atelier, etc., pour être ensuite utilisée sur les images d'une scène capturée en dehors de ce showroom, usine, atelier, etc., ce qui permet de simuler l'effet du vitrage dans n'importe quel endroit sans pour autant procéder au changement concret de fenêtre.

L'homme du métier observera que le dispositif d'affichage 10 selon l'invention permet, au moyen de plusieurs fonctions prédéterminées Δ(t) distinctes de simuler et d'affichage, à partir d'un unique ensemble d'image(s) fournit par un seul premier capteur d'images, la capture d'image(s) d'une même scène avec d'autres capteurs distincts du premier capteur et chacun associé à une fonction prédéterminée Δ(t) qui lui est propre.

La possibilité de reconfigurer à l'infini la fonction prédéterminée Δ(t) en fonction de la correspondance souhaitée entre deux capteurs d'image(s), l'un ayant fourni en entrée l'ensemble d'image et l'autre à simuler, fourni une flexibilité puissante d'affichage à l'utilisateur du dispositif et du procédé selon la présente invention.

Une telle flexibilité est propre à permettre d'approcher (i.e. simuler) le comportement de l'œil humain au cours de son adaptation à l'intensité lumineuse en déterminant, notamment de manière empirique, une fonction prédéterminée Δ(t) adaptée.

Du point de vue de l'apprentissage profond (de l'anglais *deep learning*), la solution ici proposée offre une réduction drastique de paramètres, car au lieu d'apprendre de nombreux paramètres à un grand réseau de neurones, en le formant sur différents ensembles d'images, l'homme du métier doit uniquement auparavant déterminer/choisir la fonction prédéterminée Δ(t) associée à un couple comprenant un premier capteur d'image(s) et un deuxième capteur d'image(s), pour l'appliquer ensuite dès que l'on cherche à afficher un ensemble d'image(s) représentative d'une scène obtenue avec le premier capteur, tel qu'il aurait été obtenu par le deuxième capteur distinct.

Comme indiqué précédemment, la flexibilité offerte par la solution selon la présente invention permet diverses applications telles que dans le domaine des véhicules autonomes afin de préparer des vidéos d'entrainement ou encore dans le domaine de la publicité pour simuler l'effet de nouveaux éclairages ou l'effet de vitrage à haute performance pour des lieux de vie.

**Revendications**

**1.** Procédé (32) d'affichage d'un ensemble d'image(s), ledit ensemble d'image(s) comprenant au moins une image, le procédé comprenant au moins les étapes suivantes :

- une étape de réception (34) dudit ensemble d'image(s) obtenu à partir d'un premier capteur d'image(s), le premier capteur d'image(s) étant configuré pour prendre une ou plusieurs images d'une scène en appliquant à chaque image une première exposition via un algorithme d'auto-exposition,
- une étape d'association (54) à chaque image dudit ensemble d'image(s) d'une durée d'affichage représentative d'une deuxième exposition, distincte de la première exposition pour au moins une image dudit ensemble d'image(s), la durée d'affichage simulant un changement d'algorithme d'auto-exposition respectivement associé à un changement de capteur d'image(s),
- une étape d'affichage (56) dudit ensemble d'image(s) en appliquant pour chaque image dudit ensemble d'image(s), sa durée d'affichage associée.

**2.** Procédé (32) selon la revendication 1, dans lequel ledit ensemble d'image(s) reçu et obtenu à partir du premier capteur d'image(s) comprend :

- une séquence d'images, chaque image étant associée à un instant de capture distinct, ou
- deux images d'une même scène comprenant une image à faible gamme dynamique et une image à gamme dynamique élevée, ou
- une seule image propre à être utilisée pour générer au moins lesdites deux images respectivement à faible gamme dynamique et à gamme dynamique élevée.

**3.** Procédé (32) selon la revendication 1 ou 2, dans lequel ladite association (54) est mise en œuvre en utilisant une fonction prédéterminée associant à un instant de capture de chaque image dudit ensemble d'image(s) une valeur prédéterminée de la durée d'affichage, propre à varier d'une image à l'autre dudit ensemble d'image(s).

**4.** Procédé (32) selon l'une quelconque des revendications 1 à 3, comprenant en outre, préalablement à ladite étape d'association (54), une étape de complétion (36) dudit ensemble d'image(s) par mise en œuvre d'une interpolation (46) temporelle propre à générer au moins une image additionnelle associée à un instant de capture distinct de l'instant de capture associé à chaque image dudit ensemble d'image(s) reçu et obtenu à partir du premier capteur d'image(s), ladite au moins une image additionnelle et ledit ensemble d'image(s) reçu et obtenu à partir du premier capteur d'image(s) formant un ensemble d'images complété auquel ladite étape d'association est ensuite appliquée.

**5.** Procédé (32) selon la revendication 4 dans lequel, lorsque ledit ensemble d'image(s) reçu et obtenu à partir du premier capteur d'image(s) comprend une seule image, ladite étape de complétion (36) comprend en outre, préalablement à ladite interpolation (46), l'utilisation (40) d'au moins un réseau de neurones artificiels pour générer une deuxième image additionnelle, l'ensemble d'images, complété par ladite deuxième image additionnelle, comprenant deux images d'une même scène dont une image à faible gamme dynamique et une image à gamme dynamique élevée.

**6.** Procédé (32) selon la revendication 5 dans lequel ledit au moins un réseau de neurones artificiels correspond à un ensemble de réseaux antagonistes génératifs.

**7.** Procédé (32) selon l'une quelconque des revendications 4 à 6, dans lequel, lorsque ledit ensemble d'image(s) reçu et obtenu à partir du premier capteur d'image(s) comprend au moins deux images ou, lorsque l'ensemble d'images complété comprend au moins deux images, l'étape de complétion (36) est réitérée jusqu'à atteindre un critère de remplissage dudit ensemble d'images complété, ledit critère de remplissage correspondant à une distance inter-image prédéterminée.

**8.** Procédé (32) selon la revendication 7, dans lequel ladite distance inter-image est une distance Euclidienne.

**9.** Procédé selon la revendication 7 ou 8, dans lequel lorsque ledit ensemble d'image(s) reçu et obtenu à partir du premier capteur d'image(s) comprend au moins deux images ou lorsque l'ensemble d'images complété comprend au moins deux images, l'interpolation temporelle (46) correspond à une interpolation au ralenti.

**10.** Programme d'ordinateur comportant des instructions logicielles qui lorsqu'elles sont exécutées par un ordinateur, mettent en œuvre un procédé d'affichage d'un ensemble d'image(s) comprenant au moins une image selon l'une quelconque des revendications précédentes.

**11.** Dispositif électronique (10) d'affichage d'un ensemble d'image(s), ledit ensemble d'image(s) comprenant au moins une image, **caractérisé en ce que** le dispositif comprend :

- un module de réception (12) configuré pour recevoir ledit ensemble d'image(s) obtenu à partir d'un premier capteur d'image(s), le premier capteur d'image(s) étant configuré pour prendre une ou plusieurs images d'une scène en appliquant à chaque image une première exposition via un algorithme d'auto-exposition,
- un module d'association (14) configuré pour associer à chaque image dudit ensemble d'image(s) une durée d'affichage représentative d'une deuxième exposition, distincte de la première exposition pour au moins une image dudit ensemble d'image(s), la durée d'affichage simulant un changement d'algorithme d'auto-exposition respectivement associé à un changement de capteur d'image(s),
- un module d'affichage (16) configuré pour afficher ledit ensemble d'image(s) en appliquant pour chaque image dudit ensemble d'image(s), sa durée d'affichage associée.

-12-

-16-

-30-

-20-

-22-

-24-

-14-

18

10

28

26

## FIG.1

32

Réception E-I — 34

36

Complétion

n=1 ? — 38 · Non → n=2 ? — 44 · Non → mesure de distance $\varepsilon_k$ entre deux images — 50

Oui ↓

Oui

Construction d'image additionnelle par utilisation d'un réseau de neurones artificiels — 40

n = n+1 — 42

$\varepsilon_k > \varepsilon$ ? · Oui → Interpolation — 46

n=n+1 — 48

52 · Non

Association — 54

Affichage — 56

FIG.2

FIG.3

Europäisches
Patentamt

European
Patent Office

Office européen
des brevets

**RAPPORT DE RECHERCHE EUROPEENNE**

Numéro de la demande

**EP 21 20 7181**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Loscos Céline: "Ré-éclairage et remodélisation interactifs des scènes réelles pour la réalité augmentée", , 18 février 2004 (2004-02-18), pages 1-192, XP055819053, Extrait de l'Internet: URL:https://tel.archives-ouvertes.fr/tel-00004842/document [extrait le 2021-06-29] * le document en entier * ----- | 1-11 | INV. G06T5/00 G06T5/50 H04N5/235 H04N5/232 |
| A | US 2017/332009 A1 (ZHANG FAN [CA]) 16 novembre 2017 (2017-11-16) * le document en entier * ----- | 1-11 | |

DOMAINES TECHNIQUES RECHERCHES (IPC)

G06T
H04N

Le présent rapport a été établi pour toutes les revendications

| Lieu de la recherche | Date d'achèvement de la recherche | Examinateur |
|---|---|---|
| Munich | 3 avril 2022 | Tillier, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 20 7181

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-04-2022

| Document brevet cité au rapport de recherche | Date de publication | Membre(s) de la famille de brevet(s) | Date de publication |
|---|---|---|---|
| US 2017332009 A1 | 16-11-2017 | AUCUN | |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y. LECUN et al.** Deep learning. *nature,* 2015, vol. 521 (7553), 436-444
- **G. EILERTSEN et al.** HDR image reconstruction from a single exposure using deep CNNs. *ACM Transactions on Graphics (Proc. of SIGGRAPH Asia 2017),* 2017, vol. 36 (6
- **D. MARNERIDES et al.** A Deep Convolutional Neural Network for High Dynamic Range Expansion from Low Dynamic Range Content. *EUROGRAPHICS 2018,* 2018, vol. 37 (2
- **L. SIYEONG et al.** Deep Chain HDRI: Reconstructing a High Dynamic Range Image from a Single Low Dynamic Range Image. *arXiv:1801.06277 [csCV*

- **K. MORIWAKI et al.** Hybrid Loss for Learning Single-Image-based HDR Reconstruction. *arXiv:1812.07134 [csCV*
- **H. JIANG et al.** Super SloMo: High Quality Estimation of Multiple Intermediate Frames for Video Interpolation. *arXiv:1712.00080 [csCV,* 2018
- **D. MARNERIDES et al.** A Deep Convolutional Neural Network for High Dynamic Range Expansion from Low Dynamic Range Content. *EUROGRAPHICS 2018,* 2018, vol. 37